# EUROPÄISCHE PATENTSCHRIFT

(11) **EP 2 635 638 B1**
(45) Veröffentlichungstag und Bekanntmachung des Hinweises auf die Patenterteilung: **16.12.2015**
(21) Anmeldenummer: 11782083.7
(22) Anmeldetag: 31.10.2011
(51) Int. Cl.: C08L 77/02, C08L 77/06, C08K 7/24, C08K 5/00, C08K 3/04, C08K 5/17, C08L 33/08, C08L 77/12

(54) **ZUSAMMENSETZUNG AUS POLYAMIDEN MIT NIEDRIGER KONZENTRATION AN CARBONSÄUREAMIDGRUPPEN UND ELEKTRISCH LEITFÄHIGEM KOHLENSTOFF**
COMPOSITION OF POLYAMIDES WITH LOW CONCENTRATION OF CARBOXAMIDE GROUPS AND ELECTRICALLY CONDUCTIVE CARBON
COMPOSITION DE POLYAMIDES PRÉSENTANT UNE FAIBLE CONCENTRATION EN GROUPES AMIDE D'ACIDE CARBOXYLIQUE ET EN CARBONE ÉLECTROCONDUCTEUR

(30) Priorität: 05.11.2010 DE 102010043470
(43) Veröffentlichungstag der Anmeldung: 11.09.2013
(73) Patentinhaber: Evonik Degussa GmbH, 45128 Essen (DE)
(72) Erfinder: HERMASCH, Sylvia Anita, 45768 Marl (DE); WURSCHE, Roland, 48249 Dülmen (DE); HÄGER, Harald, 59348 Lüdinghausen (DE); LEHMANN, Kathrin, 51377 Leverkusen (DE)
(86) Internationale Anmeldenummer: PCT/EP2011/069125
(87) Internationale Veröffentlichungsnummer: WO 2012/059467

(56) Entgegenhaltungen:
- EP-A1- 1 519 988
- EP-A2- 2 038 337
- WO-A1-2006/136715
- WO-A1-2010/046606
- US-A1- 2007 202 287
- US-A1- 2008 210 907

## Beschreibung

Gegenstand der Erfindung sind Kunststoffzusammensetzungen auf Basis von Polyamiden, die elektrisch leitfähige Kohlenstoffsubstrate wie Ruß, Kohlenstofffasern, Graphit, Graphen und/oder CNTs (Carbon Nanotubes) enthalten sowie Salze mit einem nichtmetallischen Kation oder eine synergistische Mischung aus diesen Salzen zusammen mit Metallsalzen, wobei die Kombination mit speziellen Dispergiermitteln essentiell ist.

Kunststoffe sind gemeinhin und bis auf wenige sehr spezielle Ausnahmen elektrische Isolatoren, auf denen sich bei der Herstellung, Verarbeitung und dem Gebrauch daraus hergestellter Folien oder Formteile hohe Oberflächenladungen ansammeln können.

Diese statischen Aufladungen führen zu unerwünschten Effekten und ernsten Gefahrensituationen, welche von der Anziehung von Staub, Haftung von hygienisch bedenklichen Verunreinigungen, Zerstörung elektronischer Bauteile durch Funkenüberschläge, physiologisch unangenehmen elektrischen Schlägen, Entzündung brennbarer Flüssigkeiten in Behältern oder Rohren, in denen diese gerührt, gegossen oder gefördert werden, bis hin zu Staubexplosionen beispielsweise beim Umfüllen mit Stäuben oder Mehlen gefüllter Großgebinde oder beim Gesteins- bzw. Kohleabbau reichen.

Es besteht daher seit dem Einsatz dieser Kunststoffe die Notwendigkeit, statische Aufladungen zu verhindern oder aber in einem Maße zu minimieren, dass diese nicht mehr gefährlich werden können.

Eine allgemein angewandte Methode, das Ableiten von Ladungen zu ermöglichen und die statische Aufladung zu minimieren, ist der Einsatz von Antistatika, d. h. nichtionischen oder ionischen grenzflächenaktiven Verbindungen und insbesondere Ammonium- und Alkalimetallsalzen.

Heute werden im Wesentlichen äußere und innere Antistatika eingesetzt.

Äußere Antistatika werden als wässrige oder alkoholische Lösungen durch Sprühen,

Aufstreichen oder Tauchen und anschließender Lufttrocknung auf die Oberfläche der Kunststoffe aufgetragen. Der verbleibende antistatische Film ist auf fast allen Kunststoffen wirksam, hat aber den Nachteil, dass er durch Reibung oder Flüssigkeit sehr leicht und ungewollt wieder entfernt wird. Aufgrund des fehlenden Depoteffektes der aus dem Inneren der Polymermasse nachmigrierenden Antistatikamoleküle (wie bei den inneren Antistatika vorhanden), weisen externe Antistatika keine Langzeitwirkung auf.

Daher werden vorzugsweise innere Antistatika verwendet, welche der Polymermasse soweit als möglich in reiner Form, ansonsten in Form so genannter "Masterbatches", d. h. konzentrierten Formulierungen, vor oder während der Verarbeitung zugesetzt werden und darin während des Injektions- oder Extrusionsprozesses homogen verteilt werden.

Die EP 2 038 337 referiert Polymerzusammensetzungen aus Polymeren und ionischen Flüssigkeiten und Metallsalzen, die zusammen mit Glykolen als Lösungsmittel und Lösungsvermittlern antistatische Eigenschaften der Polymerzusammensetzungen bewirken können. Kohlenstoffsubstrate werden hier nicht verwendet.

Auch die EP 1 519 988 beschreibt Polymerzusammensetzungen aus Polymeren zusammen mit ionischen Flüssigkeiten und deren antistatische Wirkung. Kohlenstoffsubstrate oder auch Metallsalze werden hier nicht verwendet.

Nachteilig ist bei beiden Veröffentlichungen, dass nur geringe Anteile an Antistatikum in das Polymer eingebracht werden können, wenn die mechanischen Eigenschaften der Polymere nicht nachteilig beeinflusst werden sollen.

Typische Thermoplaste haben spezifische Oberflächenwiderstände im Bereich von 10¹⁶ bis 10¹⁴ Ohm und können daher Spannungen von bis zu 15.000 Volt aufbauen. Wirksame Antistatika können die spezifischen Oberflächenwiderstände der Kunststoffe auf 10¹⁰ bis 10⁹ Ohm abbauen. Ein deutlich höheres Niveau für die Ableitung von elektrischen Ladungen muss hingegen erzielt werden, wenn Kunststoffe in elektronischen Bauteilen von Großgeräten wie z.B. im Trafo- oder Elektroschrankherstellerbereich eingesetzt werden sollen oder in einer Vielzahl von Anwendungen im Automobil- und Flugzeugbau. Hier müssen elektrisch leitfähige Formmassen eingesetzt werden, die einen spezifischen Oberflächenwiderstand von weniger als 10⁹ Ohm aufweisen müssen. Entscheidend ist darüber hinaus, dass in derartigen Kunststoffanwendungen nicht nur der Oberflächenwiderstand, sondern auch der Durchgangswiderstand durch Kunststoffteile mit einer Dicke bis zu mehreren Millimetern in einem ebensolchen Bereich liegen muss und sich bei Teilen, die mittels Spritzguss hergestellt werden, häufig Anisotropieeffekte ausbilden, die generell schwierig zu unterbinden sind.

Für die Fertigung von leitfähigen Kunststoffformteilen gibt es daher nur die Möglichkeit, entweder bereits leitfähige Kunststoffe wie Polyaniline u. ä. zu verwenden oder die zuvor genannten und als elektrische Isolatoren zu charakterisierenden Kunststoffe durch die Verwendung von Rußen, insbesondere Leitfähigkeitsrußen, Kohlenstofffasern, Graphit, Graphen und/oder CNTs leitfähig zu machen.

Leitfähige Ruße sind dabei fraktale Strukturen, die durch gegenseitige Berührung in der Lage sind, die elektrische Ladung im Polymer weiterzuleiten und auch einen niedrigen Durchgangswiderstand zu garantieren. Dazu sind im Allgemeinen hohe Füllgrade zwischen 15 und 25 Gew.-% erforderlich, die nicht nur die technischen Polymereigenschaften besonders in Hinsicht auf die mechanischen Kennzahlen wie Kerbschlagzähigkeit oder Zugfestigkeit negativ beeinflussen, sondern auch eine ungenügende Oberflächengüte für Bauteile im sichtbaren Bereich bewirken, die von der Industrie bemängelt wird.

Als Leitfähigkeitsruße werden spezielle Industrieruße bezeichnet, die unter anderem durch das Furnace-Ruß-Verfahren oder durch thermische Spaltung mittels Acetylen-Ruß-Verfahren hergestellt werden. Ihr DBP(Dibutylphthalat)-Wert liegt dabei über 110 ml je 100 g Ruß mit einer extrem hohen spezifischen Oberfläche. Typische Handelsprodukte sind z. B. Akzo Ketjenblack EC oder auch Evonik Printex XE2 oder Printex L6.

Im Vergleich dazu können zwar Kohlenstofffasern oder Carbon Nanotubes (CNTs) und speziell Graphen in deutlich geringeren Konzentrationen eingesetzt werden, doch ist ihre Dispergierung extrem prozessabhängig. Beispielsweise ist es entscheidend für die spätere Wirksamkeit, wie die CNTs im Bereich der Eingabe/des Feedings in die Extrusionsschnecke eingebracht werden und welche Schneckenkonfiguration in einem Extrusionsprozess gewählt wird. Dies sind nur einige relevante Prozessparameter, die einer beliebig einfachen Nutzung entgegen stehen. Weiterhin liegen die Kosten der Kohlenstofffasern oder CNTs erheblich über dem Preis von leitfähigen Rußen - Graphen ist noch deutlich teurer -, so dass sofort deutlich wird, dass hier ein weiterer Optimierungsbedarf in der Absenkung der Kohlenstofffaser- oder CNT-Konzentration liegt. In einigen Kunststoffen ist darüber hinaus die Dispergierung dieser Produkte besonders schwierig, da die Schmelzviskosität und die Polarität einiger Thermoplaste dem entgegen wirken.

Carbon Nanotubes sind neben Graphit, Diamant, amorphem Kohlenstoff und Fullerenen eine weitere Modifikation des Elements Kohlenstoff. Die Kohlenstoffatome sind dabei in Sechsecken angeordnet. Die Struktur entspricht einer aufgerollten einatomigen oder mehratomigen Schicht von Graphit, so dass ein Hohlzylinder mit typischerweise wenigen Nanometern Durchmessern und bis zu einigen Millimetern Länge entsteht. Man unterscheidet grundsätzlich mehrwandige und einwandige Kohlenstoff-Nanoröhren, in der Literatur meist auch MWNTs und SWNTs (aus dem Englischen: multi walled nanotubes und single walled nanotubes) abgekürzt. Kohlenstoff-Nanoröhren zeigen aufgrund von Van-der-Waals-Kräften eine starke Tendenz, sich zu Bündeln zu vereinigen, weshalb die Entknäuelung/Dispergierung ohne starkes Verkürzen durch starke Scherkräfte im Extrusionsprozess essentiell ist. Typische Handelsprodukte sind von verschiedenen Herstellern erhältlich, wovon hier stellvertretend die Firmen Bayer, Nanocyl und Arkema mit ihren Grades Baytubes^{®} C150P, Baytubes^{®}C 150 HP, Baytubes^{®} C 70P, Nanocyl^{™} NC 7000 und Graphistrength C100 genannt werden sollen. Weitere Hersteller bieten CNTs in Form von Masterbatches an, beispielsweise Hyperion und C-Polymers.

Metallsalze sind bekannte und wirksame Antistatika. Sie haben jedoch den Nachteil, dass sie zur homogenen Verteilung in Kunststoffen vor der Anwendung gelöst werden müssen. Übliche Lösungsmittel sind Alkohole, Ether, Ester, Polyether, cyclische Ether, cyclische Ester, Amide, cyclische Amide, aromatische Verbindungen oder ganz allgemein organische Lösungsmittel.

Die Löslichkeit der Metallsalze ist jedoch zum Teil sehr gering, so dass für ausreichend wirksame Einsatzkonzentrationen große Mengen an Lösungsmittel verwendet werden müssen.

Solche Lösungsmittelmengen als Zusatzstoffe in den Polymerzusammensetzungen sind weder in großen noch in kleinen Mengen sicherheitstechnisch in Extrusionsprozessen beim Aufschmelzen der Thermoplaste und dem Einarbeiten der leitfähigen kohlenstoffbasierten Produkte möglich zu verarbeiten, noch wären sie hinsichtlich der resultierenden weichmachenden Eigenschaften für die mechanischen Parameter der Kunststoffzusammensetzungen zu akzeptieren, da zwar eine Abweichung von mechanischen Kennzahlen tolerierbar ist, diese aber im Allgemeinen nicht mehr als 10% unterhalb des Ausgangswertes des gefüllten Polymers ohne Verwendung der Additive - hier beispielsweise des Metallsalzes zusammen mit dem dafür notwendigen Lösungsmittel - liegen darf.

Sofern derartige Antistatikaformulierungen in Kunststoffen eingesetzt werden, haben sie den Nachteil, dass sie die optischen und vor allem die physikalischen Eigenschaften des Endproduktes nachteilig beeinflussen.

Formmassen auf Basis von Polyamiden, die eine geringere Konzentration an Carbonsäureamidgruppen aufweisen, sind gegenüber Formmassen auf Basis von Polyamiden wie PA6 oder PA66 wegen der geringeren Feuchtigkeitsaufnahme, der guten Beständigkeit gegenüber polaren als auch unpolaren Medien sowie der guten mechanischen Eigenschaften für viele Anwendungen erste Wahl.

Derartige Formmassen müssen häufig elektrisch dissipativ oder elektrisch leitfähig eingestellt sei, wobei derzeit folgende Anwendungen im Vordergrund stehen:
- Verhinderung von statischer Aufladung z. B. bei Verpackungen, bei Dosiersystemen für Aerosole, Pulver oder Flüssigkeiten, bei Kraftstoffleitungen und z. B. bei Elektronikbauteilen wie Chipträgern, wo aus Sicherheitsgründen die elektrostatische Aufladung verhindert werden muss,
- elektromagnetische Abschirmung von elektrischen Geräten und elektronischen Baugruppen, z. B. in der Kfz-, EDV-, Nachrichten- und Kommunikationstechnik, sowie
- Nutzung der elektrischen Leitfähigkeit, z. B. Potentialsteuerung im Kabel, stromabhängige Schaltelemente, Heizelemente oder für die elektrostatische Lackierung von Kunststoffteilen. Die elektrostatische Lackierung hat sich in den letzten Jahren in sehr vielen Bereichen, insbesondere in der Kfz-Industrie, durchgesetzt. Grundvoraussetzung der elektrostatischen Lackierung ist die Möglichkeit, elektrische Ladungen auf die zu lackierenden Formteile aufbringen zu können. Dies ist bei Metallen leicht, bei üblichen Thermoplasten wegen deren geringer Leitfähigkeit aber normalerweise nicht in ausreichendem Maße möglich.

Bei der Compoundierung von Polymeren mit leitfähigen Füllstoffen treten jedoch häufig Agglomerate nicht vollständig dispergierter Füllstoffe auf, die die Produktqualität der Zusammensetzung einschränken. Beispielsweise können solche Agglomerate zu Oberflächendefekten führen, die für die Anwendung nicht tolerierbar sind. Zudem wird bei gegebener Konzentration an leitfähigem Füllstoff die maximal erreichbare Leitfähigkeit bei weitem nicht erreicht.

Die Beurteilung der Dispergiergüte kann zum Beispiel über lichtmikroskopische Untersuchungen an Dünnschnitten erfolgen, wobei die Flächenanteile der Agglomerate erfasst werden.

Es bestand vor diesem Hintergrund die Aufgabe, die Dispergierung von elektrisch leitfähigen Füllstoffen in den genannten Polyamiden zu verbessern. In einem Aspekt der Aufgabe sollte die Oberflächenqualität der Formmasse auf diese Weise verbessert werden. In einem weiteren Aspekt der Aufgabe sollte bei einem gegebenen Gehalt an elektrisch leitfähigem Füllstoff die elektrische Leitfähigkeit verbessert werden bzw. zur Erzielung einer gewünschten Leitfähigkeit ein geringerer Füllstoffgehalt erforderlich sein.

Diese Aufgabe wurde dadurch gelöst, dass bestimmte Additive zugesetzt werden, um eine Verbesserung der Dispergierung zu erzielen.

Gegenstand der Erfindung sind somit Polyamidzusammensetzungen, die folgende Komponenten enthalten:
a) Mindestens 40 Gew.-Teile, vorzugsweise mindestens 50 Gew.-Teile und besonders bevorzugt mindestens 60 Gew.-Teile eines Polyamids, dessen Monomereinheiten im arithmetischen Mittel mindestens 7,5 C-Atome enthalten,
b) 0,1 bis 15 Gew.-Teile, vorzugsweise 1 bis 12 Gew.-Teile und besonders bevorzugt 2,5 bis 10 Gew.-Teile mindestens eines Salzes mit einem nichtmetallischen Kation,
c) 0,1 bis 25 Gew.-Teile, vorzugsweise 1 bis 20 Gew.-Teile und besonders bevorzugt 2 bis 15 Gew.-Teile mindestens eines Dispergiermittels auf Basis von Estern oder Amiden gemäß Anspruch 1 sowie
d) einen elektrisch leitfähigen Kohlenstoff, ausgewählt aus der Gruppe Ruß, Graphitpulver, Kohlenstofffasern, Carbon Nanotubes und/oder Graphen, in einer Menge, die in der Polymerzusammensetzung einen spezifischen Oberflächenwiderstand gemäß IEC 60167 von 10⁻¹ bis 10¹⁰Ω, vorzugsweise 10⁰ Ω bis 10⁸ Ω und besonders bevorzugt von 10⁻¹ Ω bis 10⁶ Ω ergibt,
wobei das Polyamid der Komponente a) kein PA12 ist, falls als Komponente d) Carbon Nanotubes enthalten sind.

Die Polyamidzusammensetzung kann darüber hinaus optional
e) 0 bis 5 Gew.-Teile, vorzugsweise 0,1 bis 3 Gew.-Teile und besonders bevorzugt 0,1 bis 2 Gew.-Teile mindestens eines Metallsalzes sowie
f) übliche Hilfs- und Zusatzstoffe enthalten,
wobei die Summe der Gewichtsteile der Komponenten a) bis f) 100 beträgt.

In einer möglichen Ausführungsform enthält die Polyamidzusammensetzung
- 0,1 bis 10 Gew.-Teile, bevorzugt 0,5 bis 5 Gew.-Teile und besonders bevorzugt 1 bis 3,5 Gew.-Teile der Komponente b),
- 1 bis 10 Gew.-Teile, bevorzugt 1,5 bis 8 Gew.-Teile und besonders bevorzugt 2 bis 5 Gew.-Teile der Komponente c),
- 1 bis 10 Gew.-Teile, bevorzugt 2 bis 8 Gew.-Teile und besonders bevorzugt 2,5 bis 6 Gew.-Teile Carbon Nanotubes als Komponente d) sowie
- 0 bis 5 Gew.-Teile, bevorzugt 0,1 bis 4 Gew.-Teile und besonders bevorzugt 0,5 bis 3 Gew.-Teile der Komponente e),
wobei auch hier die Summe der Gewichtsteile der Komponenten a) bis f) 100 beträgt.

In einer weiteren möglichen Ausführungsform besitzt die Polyamidzusammensetzung darüber hinaus einen spezifischen Durchgangswiderstand gemäß IEC 60093 von maximal 10⁹ Ωm, vorzugsweise von 10⁻³ Ωm bis 10⁷ Ωm und besonders bevorzugt von 10⁻¹ Ωm bis 10⁵ Ωm.

Die Polyamide der Komponente a) sind herstellbar aus einer Kombination von Diamin und Dicarbonsäure, aus einer ω-Aminocarbonsäure und/oder dem entsprechenden Lactam. Hierbei enthält die ω-Aminocarbonsäure bzw. das Lactam bzw. ein Gemisch aus verschiedenen derartigen Monomeren im arithmetischen Mittel mindestens 7,5 C-Atome. Bei einer Kombination von Diamin und Dicarbonsäure muss das arithmetische Mittel der C-Atome von Diamin und Dicarbonsäure mindestens 7,5 betragen. Geeignete Polymere sind beispielsweise PA69 (herstellbar aus Hexamethylendiamin [6 C-Atome] und Nonandisäure [9 C-Atome]; das Mittel der C-Atome in den Monomereinheiten beträgt hier somit 7,5), PA610, PA612, PA613, PA614, PA618, PA106, PA1010, PA1012, PA1212, PA1013, PA1014, PA11, PA9T, PA10T, PAPACM10, PAPACM12 sowie generell Polyamide, die sich von einem Diamin sowie Nonadecandisäure herleiten. Geeignet sind auch Copolyamide; die genannten Bausteine Diamin und Dicarbonsäure, ω-Aminocarbonsäure sowie Lactam können hierbei nach Belieben kombiniert werden. Darüber hinaus sind auch auf diesen Polyamiden basierende Polyetheramide sowie Polyetheresteramide erfindungsgemäß geeignet. Polyetheramide sind aus dicarbonsäuregeregelten Polyamidblöcken und Polyetherdiaminblöcken aufgebaut, Polyetheresteramide entsprechend aus dicarbonsäuregeregelten Polyamidblöcken und Polyetherdiolblöcken. Die Polyethereinheiten enthalten in der Regel 2 bis 4 C-Atome je Ethersauerstoff. Polyetheramide und Polyetheresteramide sind dem Fachmann bekannt und in einer Vielzahl von Typen handelsüblich.

Vorzugsweise sind bei den Polyamiden der Komponente a) in den Monomereinheiten im arithmetischen Mittel maximal 40 und besonders bevorzugt maximal 26 C-Atome enthalten.

Die erfindungsgemäß als Komponente b) verwendeten Salze mit einem nichtmetallischen Kation setzen sich vorzugsweise aus mindestens einer quartären Stickstoff- und/oder Phosphorverbindung und mindestens einem Anion zusammen, wobei das Kation besonders bevorzugt ausgewählt ist aus der Gruppe der substituierten Ammonium-, Phosphonium-, Pyridinium-, Imidazolinium- und/oder Imidazolium-Kationen und insbesondere bevorzugt aus der Gruppe der acyclischen quarternären Ammonium-, 1,3-Dialkylimidazolium-, 1,2,3-Trialkylimidazolium-, 1,3-Dialkylimidazolinium- und/oder 1,2,3-Trialkylimidazoliniumkationen, wobei sich die unterschiedlichen Ladungen der Kationen und Anionen insgesamt jeweils ausgleichen.

Besonders bevorzugt wird das nichtmetallische Kation ausgewählt aus mindestens einem Kation der allgemeinen Formeln:

R¹R²R³R⁴N⁺ (1)

R¹R²N⁺=CR³R⁴ (2)

R¹R²R³R⁴P⁺ (3)

R¹R²P⁺=CR³R⁴ (4)

in denen
- R¹,R²,R³,R⁴: gleich oder verschieden sein können und folgendes bedeuten können: Wasserstoff, einen linearen oder verzweigten oder Doppelbindungen enthaltenden aliphatischen Kohlenwasserstoffrest mit 1 bis 30 Kohlenstoffatomen oder einen gesättigten oder ungesättigten cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome enthaltenden Rest wie Sauerstoff, -NH-, -NR'-unterbrochenen linearen oder verzweigten und gegebenenfalls ungesättigten aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -(O)C-NH, -(CH₃)N-C(O)-, -(O)C-N(CH₃)-, -S(O₂)-O-, -O-S(O₂)-, -S(O₂)-NH-, -NH-S(O₂)-, -S(O₂)-N(CH₃)-, -N(CH₃)-S(O₂)-, unterbrochenen linearen oder verzweigten oder auch Doppelbindungen enthaltenden aliphatischen Kohlenwasserstoffrest mit 2 bis 30 Kohlenstoffatomen, einen endständig mit -OH, -OR', -NH₂, -N(H)R', -N(R')₂ funktionalisierten linearen oder verzweigten oder auch Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß -(R⁵-O)ₙ-R⁶, wobei
- R': gleich einem gesättigten oder ungesättigten C₁-C₃₀-Alkylrest, insbesondere CH₃ ist
- R⁵: ein 2 bis 4 Kohlenstoffatome enthaltender linearer oder verzweigter Kohlenwasserstoffrest,
- n: 1 bis 100, vorzugsweise 2 bis 60, ist und
- R⁶: Wasserstoff, einen linearen oder verzweigten oder Doppelbindungen enthaltenden aliphatischen Kohlenwasserstoffrest mit 1 bis 30 Kohlenstoffatomen, oder einen gesättigten oder Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen oder einen Alkylarylrest mit 7 bis 40 Kohlenstoffatomen bedeutet oder einen Rest -C(O)-R⁷ mit
- R⁷: gleich einem linearen oder verzweigten oder auch Doppelbindungen enthaltenden aliphatischen Kohlenwasserstoffrest mit 1 bis 30 Kohlenstoffatomen oder gleich einem Doppelbindungen enthaltenden cycloaliphatischen Kohlenwasserstoffrest mit 5 bis 40 Kohlenstoffatomen oder gleich einem aromatischen Kohlenwasserstoffrest mit 6 bis 40 Kohlenstoffatomen oder gleich einem Alkylarylrest mit 7 bis 40 Kohlenstoffatomen ist.

Als Kationen kommen ferner Ionen in Betracht, die sich von gesättigten oder ungesättigten cyclischen Verbindungen sowie von aromatischen Verbindungen mit jeweils mindestens einem dreibindigen Stickstoffatom in einem 4- bis 10-, vorzugsweise 5- bis 6-gliedrigen heterocyclischen Ring ableiten, der weiter substituiert sein kann. Solche Kationen lassen sich vereinfacht (d. h. ohne Angabe von genauer Lage und Zahl der Doppelbindungen im Molekül) durch die nachstehenden allgemeinen Formeln (5), (6) und (7) beschreiben, wobei die heterocyclischen Ringe gegebenenfalls auch mehrere Heteroatome enthalten können 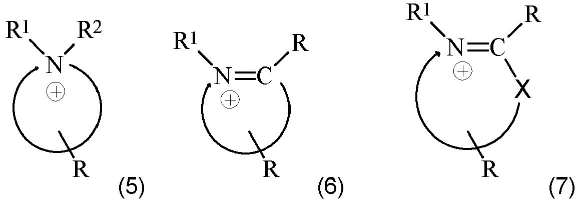 und worin die Substituenten die folgende Bedeutung haben
- R: ist Wasserstoff, ein linearer oder verzweigter, gegebenenfalls Doppelbindungen enthaltender aliphatischer Kohlenwasserstoffrest mit 1 bis 30 Kohlenstoffatomen, ein cycloaliphatischer, gegebenenfalls Doppelbindungen enthaltender Kohlenwasserstoffrest mit 5 bis 40 Kohlenstoffatomen, ein aromatischer Kohlenwasserstoffrest mit 6 bis 40 Kohlenstoffatomen oder ein Alkylarylrest mit 7 bis 40 Kohlenstoffatomen.
- R¹ und R²: besitzen dabei die bereits vorgenannte Bedeutung,
- X: ist ein Sauerstoffatom, ein Schwefelatom oder ein substituiertes Stickstoffatom NR^{1a}, wobei
- R^{1a}: Wasserstoff, einen linearen oder verzweigten, gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden C₁-C₃₀-Alkylrest, insbesondere CH₃) unterbrochenen linearen oder verzweigten, gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -(CH₃)N-C(O)-, -(O)C-N(CH₃)-, -S(O₂)-O- -O-S(O₂)-, -S(O₂)-NH-, -NH-S(O₂)-, -S(O₂)-N(CH₃)-, -N(CH₃)-S(O₂)-, unterbrochenen linearen oder verzweigten, gegebenenfalls Doppelbindungen enthaltenden aliphatischen Kohlenwasserstoffrest mit 2 bis 30 Kohlenstoffatomen, einen endständig mit OH, OR', NH₂, N(H)R', N(R')₂ (mit R' gleich einem gegebenenfalls Doppelbindungen enthaltenden C₁-C₃₀-Alkylrest) funktionalisierten linearen oder verzweigten, gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß -(R⁵-O)ₙ-R⁶ bedeuten.

Beispiele für cyclische Kationen basierend auf den Stickstoffverbindungen der vorgenannten Art sind solche, bei denen der Stickstoff Teil eines Rings ist, der ausgewählt ist aus Pyrrolidin, Dihydropyrrol, Pyrrol, Imidazolin, Oxazolin, Oxazol, Thiazolin, Thiazol, Isoxazol, Isothiazol, Indol, Carbazol, Piperidin, Pyridin, die isomeren Picoline und Lutidine, Chinolin und iso-Chinolin. Die cyclischen Stickstoffverbindungen der allgemeinen Formeln (5), (6) und (7) können unsubstituiert (R = H), einfach oder auch mehrfach durch den Rest R substituiert sein, wobei bei einer Mehrfachsubstitution durch R die einzelnen Reste R unterschiedlich sein können.

Als Kationen kommen weiterhin Ionen in Betracht, die sich von gesättigten acyclischen, gesättigten oder ungesättigten cyclischen Verbindungen sowie von aromatischen Verbindungen mit jeweils mehr als einem dreibindigen Stickstoffatom in einem 4- bis 10-, vorzugsweise 5- bis 6-gliedrigen heterocyclischen Ring ableiten und im Ring mehr als ein Stickstoffatom enthalten. Diese Verbindungen können sowohl an den Kohlenstoffatomen als auch an den Stickstoffatomen substituiert sein. Sie können ferner durch, gegebenenfalls substituierte, Benzolringe und/oder Cyclohexanringe unter Ausbildung mehrkerniger Strukturen anneliert sein. Beispiele für solche Verbindungen sind Pyrazol, 3,5-Dimethylpyrazol, Imidazol, Benzimidazol, N-Methylimidazol, Dihydropyrazol, Pyrazolidin, Pyridazin, Pyrimidin, Pyrazin, Pyridazin, Pyrimidin, 2,3-, 2,5- und 2,6-Dimethylpyrazin, Cimolin, Phthalazin, Chinazolin, Phenazin und Piperazin. Insbesondere vom Imidazol und seinen Alkyl- und Phenylderivaten abgeleitete Kationen der allgemeinen Formel (8) haben sich als Bestandteil der Salze mit nichtmetallischen Kationen bewährt.

Als Kationen kommen ferner Ionen in Betracht, welche zwei Stickstoffatome enthalten und durch die allgemeine Formel (8) wiedergegeben sind, 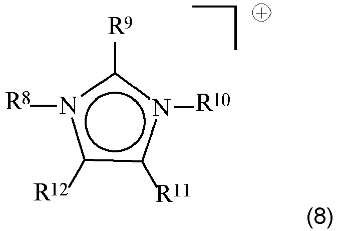 in denen
- R⁸,R⁹,R¹⁰,R¹¹,R¹²: gleich oder unterschiedlich sind und Wasserstoff, einen linearen oder verzweigten, gegebenenfalls Doppelbindungen enthaltenden aliphatischen Kohlenwasserstoffrest mit 1 bis 30, vorzugsweise 1 bis 8, insbesondere 1 bis 4 Kohlenstoffatomen, einen cycloaliphatischen, gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden C₁-C₃₀-Alkylrest), unterbrochenen linearen oder verzweigten, gegebenenfalls Doppelbindungen enthaltenden aliphatischen Kohlenwasserstoffrest mit 1 bis 30 Kohlenstoffatomen, einen durch ein oder mehrere Funktionalitäten, ausgewählt aus der Gruppe -O-C(O)-, -(O)C-O-, -NH-C(O)-, -(O)C-NH, -(CH₃)N-C(O)-, -(O)C-N(CH₃)-, -S(O₂)-O-, -O-S(O₂)-, -S(O₂)-NH-, -NH-S(O₂)-, -S(O₂)-N(CH₃)-, -N(CH₃)-S(O₂)-, unterbrochenen linearen oder verzweigten, gegebenenfalls Doppelbindungen enthaltenden aliphatischen Kohlenwasserstoffrest mit 1 bis 30 Kohlenstoffatomen, einen endständig OH, OR', NH₂, N(H)R', N(R')₂ mit R' gleich einem gegebenenfalls Doppelbindungen enthaltenden C₁-C₃₀-Alkylrest, funktionalisierten linearen oder verzweigten, gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether aufgebaut aus -(R⁵-O)ₙ-R⁶ bedeuten,
wobei
R⁵ ein 2 bis 4 Kohlenstoffatome enthaltender Kohlenwasserstoffrest,
n 1 bis 100 ist und
R⁶ Wasserstoff, einen linearen oder verzweigten, gegebenenfalls Doppelbindungen enthaltenden aliphatischen Kohlenwasserstoffrest mit 1 bis 30 Kohlenstoffatomen, einen cycloaliphatischen, gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-R⁷ mit
R⁷ gleich einem linearen oder verzweigten, gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen oder einem Alkylarylrest mit 7 bis 40 Kohlenstoffatomen ist.

Die Art der Anionen im Salz der Komponente b) ist unkritisch. Geeignet sind beispielsweise Anionen ausgewählt aus der Gruppe der Halogenide, Carboxylate, Phosphate, Thiocyanat, Isothiocyanat, Dicyanamid, Sulfat, Hydrogensulfat, Alkyl- und Arylsulfate, Polyethersulfate und -sulfonate, Perfluoralkylsulfate, Alkyl- und Arylsulfonate, perfluorierte Alkyl- und Arylsulfonate, Tetrafluoroborat, Hexafluorophosphat, Bis(perfluoralkylsulfonyl)amide oder -imide, Bis(trifluormethylylsulfonyl)imid, Alkyl- und Aryltosylate, Perfluoralkyltosylate, Nitrat, Alkyl- und Arylcarboxylate, Perfluoralkylcarboxylate, Perchlorat, Tetrachloroaluminat, Saccharinat, Tetraphenylborat, Tetrakis(pentafluorphenyl)borat und/oder Polyetherphosphate. Hierbei können auch Mischungen unterschiedlicher Salze eingesetzt werden.

Erfindungsgemäß bevorzugt sind solche Salze mit einem nichtmetallischen Kation bzw. deren Mischungen, die eine Kombination eines 1,3-Dialkylimidazolium-, 1,2,3-Trialkylimidazolium-, 1,3-Dialkylimidazolinium- und/oder 1,2,3-Trialkylimidazoliniumkations mit einem Anion ausgewählt aus der Gruppe der Halogenide, Bis(trifluormethylylsulfonyl)imid, Perfluoralkyltosylate, Alkylsulfate und -sulfonate, perfluorierte Alkylsulfonate und -sulfate, Perfluoralkylcarboxylate, Perchlorat, Dicyanamid, Thiocyanat, Isothiocyanat, Tetraphenylborat, Tetrakis(pentafluorphenyl)borat, Tetrafluoroborat und/oder Hexafluorophosphat darstellen. Darüber hinaus können auch einfache, kommerziell erhältliche, acyclische quarternäre Ammoniumsalze wie z.B. Ethyl-bis(polyethoxyethanol)-talgalkylammoniumethylsulfat, Methyl-bis(pentaethoxyethanol)cocos-ammoniummethylsulfat, 1-Butyl-3-methylimidazoliumthiocyanat, 1-Ethyl-3-methylimidazoliumbromid, 1,3-Dimethylimidazoliummethylsulfat, 1-Ethyl-3-methylimidazoliumethylsulfat, Bis(2-hydroxyethyl)-dimethylammoniummethansulfonat oder auch Rezol Heqams (Produkte der Evonik Goldschmidt GmbH) eingesetzt werden.

Das Dispergiermittel der Komponente c) wird aus folgenden Substanzklassen ausgewählt:
c1) Polyacrylsäureester, herstellbar durch Umesterung eines durch Polymerisation erhältlichen Polyacrylsäurealkylesters, dessen Alkylreste 1 bis 3 Kohlenstoffatome aufweisen und der vorzugsweise eine Molmasse von 1.000 - 10.000 g/mol und besonders bevorzugt von 2.000 - 5.000 g/mol besitzt, mit
   a) gesättigten aliphatischen Alkoholen mit 4 bis 50 und bevorzugt 8 bis 30 Kohlenstoffatomen und/oder
   b) ungesättigten aliphatischen Alkoholen mit 4 bis 50 und bevorzugt 8 bis 30 Kohlenstoffatomen,
   wobei das molare Verhältnis der Alkoholkomponenten a) und b) 1 : 0 bis 0 : 1, bevorzugt 0,75 : 0,25 bis 0,25 : 0,75 und besonders bevorzugt 0,6 : 0,4 bis 0,4 : 0,6 beträgt und die Komponenten a) und b) in solchen Mengen verwendet werden, dass 30 bis 100 % und bevorzugt 70 bis 100 % der Estergruppen umgeestert werden.
   In einer bevorzugten Ausführungsform sind mindestens 25 % der Estergruppen kurzkettig mit 1 bis 4 Kohlenstoffatomen im Alkoholanteil und mindestens 25 %, besonders bevorzugt mindestens 30 % und insbesondere bevorzugt mindestens 40 % der Estergruppen langkettig mit 10 bis 50 Kohlenstoffatomen und bevorzugt 14 bis 50 Kohlenstoffatomen im Alkoholanteil. Hierbei sind Oleylreste und Stearylreste bevorzugt.
   Neben den genannten Alkoholen können, falls gewünscht, auch andere Alkohole bei der Umesterung mit eingesetzt werden, etwa Polyoxyalkylenmonoole und/oder Dialkylaminoalkanole, wie sie in der EP 0 751 171 A2 beschrieben sind.
   Geeignete Produkte sind beispielsweise unter den Bezeichnungen TEGOMER^{®} DA 100N und TEGOMER^{®} DA 102 (Evonik Goldschmidt GmbH) kommerziell erhältlich.
c2) Polyester-Polyamin-Kondensationsprodukte, erhältlich durch die teilweise oder vollständige Umsetzung von
   A) einem oder mehreren aminofunktionellen Polymeren, das mindestens vier Aminogruppen enthält, mit
   B) einem oder mehreren Polyestern der allgemeinen Formeln (I)/(Ia)

      T-C(O)-[O-A-C(O)]ₓ-OH (I)

      T-O-[C(O)-A-O-]_{y}-Z (Ia)

      und
   C) einem oder mehreren Polyethern der allgemeinen Formel (II)/(IIa)

      T-C(O)-B-Z (II)

      T-O-B-Z (IIa)

      worin
      - T: ein Wasserstoffrest und/oder ein gegebenenfalls substituierter, linearer oder verzweigter Aryl, Arylalkyl, Alkyl- oder Alkenylrest mit 1 bis 24 Kohlenstoffatomen ist,
      - A: mindestens ein zweiwertiger Rest ist, ausgesucht aus der Gruppe der linearen, verzweigten, cyclischen und aromatischen Kohlenwasserstoffe,
      - Z: mindestens ein Rest ist, ausgesucht aus der Gruppe der Sulfonsäuren, Schwefelsäuren, Phosphonsäuren, Phosphorsäuren, Carbonsäuren, Isocyanate, Epoxide, insbesondere der Phosphorsäure und (Meth)-Acrylsäure,
      - B: ein Rest der allgemeinen Formel (III) ist

      -(CₗH₂ₗO)ₐ -(CₘH₂ₘO)_{b} -(CₙH₂ₙO)_{c}-(SO)_{d}- (III)

      SO = -CH₂-CH(Ph)-O- mit Ph = Phenylrest,
      a,b,c unabhängig voneinander Werte von 0 bis 100 sind, mit der Maßgabe, dass die Summe aus a + b + c ≥ 0, vorzugsweise 5 bis 35, insbesondere 10 bis 20 ist, mit der Maßgabe, dass die Summe aus a + b + c + d > 0,
      d ≥ 0, vorzugsweise 1 bis 5 ist,
      I,m,n unabhängig voneinander ≥ 2, vorzugsweise 2 bis 4 ist,
      x,y unabhängig voneinander ≥ 2 sind.

Die Reaktionsprodukte können in Form der Amide und/oder der entsprechenden Salze vorliegen. Weist der Molekülteil "Z" eine Mehrfachbindung auf, wie dies beispielsweise bei den Polyethern und den Alkohol gestarteten Polyestern der Fall sein kann, in denen die endständige OH-Gruppe mit einer ungesättigten Säure wie (Meth)acrylsäure verestert wurde, erfolgt die Bindung über eine Michael-Addition der NH-Funktion an die Doppelbindung.

Beispiele für aminofunktionelle Polymere sind aminofunktionelle Polyaminosäuren wie Polylysin von Aldrich Chemical Co.; aminofunktionelle Silicone, welche unter dem Handelsnamen Tegomer^{®} ASi 2122 von der Evonik Degussa GmbH; Polyamidoamine, welche unter dem Handelsnamen Polypox^{®}, Aradur^{®} oder "Starburst^{®}" Dendrimere von Aldrich Chemical Co.; Polyallylamine und Poly(N-alkyl)allylamine welche unter den Handelsnamen PAA von Nitto Boseki; Polyvinylamine, welche unter dem Handelsnamen Lupamin^{®} von BASF AG; Polyalkylenimine, wie zum Beispiel Polyethylenimine, welche unter den Handelsnamen Epomin^{®} (Nippon Shokubai Co., Ltd.), Lupasol^{®} (BASF AG); Polypropyleneimine, welche unter dem Handelsnamen Astramol^{®} von DSM AG, erhältlich sind. Weitere Beispiele an aminofunktionellen Polymeren stellen die o. g. Systeme durch Vernetzung mit aminreaktiven Gruppen dar. Diese Vernetzungsreaktion erfolgt beispielsweise über mehrfunktionelle Isocyanate, Carbonsäuren, (Meth)acrylate und Epoxiden. Weitere Beispiele sind Poly(meth)acrylatpolymere, die Dimethylaminopropyl(meth)-acrylamid (Evonik Degussa GmbH) oder Dimethylaminoethyl(meth)acrylat (Evonik Degussa GmbH) als Monomere beinhalten.

Es ist dem Fachmann bekannt, dass auch andere aminofunktionelle Polymere möglich sind; diese können ebenfalls eingesetzt werden.

Typischerweise werden aminofunktionelle Polymere mit einem Molekulargewicht von 400 g/mol bis 600.000 g/mol verwandt.

Beispiele für den Rest T sind Alkylreste mit 1 bis 24 Kohlenstoffatomen, wie der Methyl-, Ethyl-, Propyl-, iso-Propyl-, Butyl-, iso-Butyl-, tertiär-Butyl-, Hexyl-, iso-Hexyl-, Octyl-, Nonyl-, iso-Nonyl-, Decyl-, Dodecyl-, Hexadecyl- und Octadecylrest. Beispiele für gegebenenfalls substituierte Aryl- oder Arylalkylreste mit bis zu 24 Kohlenstoffatomen, sind der Phenyl-, Benzyl-, Toluyl- oder Phenethylrest.

Die Polyestergruppen -[O-A-C(O)]ₓ- und -[C(O)-A-O-]_{y}- enthalten durchschnittlich mehr als zwei Estergruppen und weisen ein mittleres Molekulargewicht Mₙ von 100 bis 5.000 g/mol auf. Besonders bevorzugt ist ein Wert von Mₙ = 200 bis 2.000 g/mol.

Eine besonders bevorzugte Ausführungsform der vorliegenden Erfindung ist dadurch gekennzeichnet, dass die Polyestergruppe durch an sich bekannte Verfahren durch ringöffnende Polymerisation mit einem Startermolekül wie T-CH₂-OH oder T-COOH und ein oder mehreren Lactonen, wie zum Beispiel β-Propiolacton, β-Butyrolacton, γ-Butyrolacton, 3,6-Dimethyl-1,4-dioxan-2,5-dion, δ-Valerolacton, γ-Valerolacton, ε-Caprolacton, γ-Caprolacton, 4-Methylcaprolacton, 2-Methylcaprolacton, 5-Hydroxydodecansäurelacton, 12-Hydroxydodecansäurelacton, 12-Hydroxy-9-octadecensäure, 12-Hydroxyoctadecansäure, erhalten wird.

Startermoleküle wie T-COOH - sowie die daraus herstellbaren Fettalkohole T-CH₂-OH - sind vorzugsweise die auf diesem Gebiet bekannten und üblichen einbasischen Fettsäuren auf Basis natürlicher pflanzlicher oder tierischer Fette und Öle mit 6 bis 24 Kohlenstoffatomen, insbesondere mit 12 bis 18 Kohlenstoffatomen, wie Capronsäure, Caprylsäure, Caprinsäure, Laurinsäure, Myristinsäure, Palmitinsäure, Palmitoleinsäure, Isostearinsäure, Stearinsäure, Ölsäure, Linolsäure, Petroselinsäure, Elaidinsäure, Arachinsäure, Behensäure, Erucasäure, Gadoleinsäure, Rapsölfettsäure, Sojaölfettsäure, Sonnenblumenölfettsäure, Tallölfettsäure welche allein oder in Mischung in Form ihrer Glyceride, Methyl- oder Ethylester oder als freie Säuren eingesetzt werden können, sowie die bei der Druckspaltung anfallenden technischen Mischungen. Geeignet sind prinzipiell alle Fettsäuren mit ähnlicher Kettenverteilung.

Der Gehalt dieser Fettsäuren bzw. Fettsäureester an ungesättigten Anteilen, wird - soweit dies erforderlich ist - durch die bekannten katalytischen Hydrierverfahren auf eine gewünschte Jodzahl eingestellt oder durch Abmischung von vollhydrierten mit nichthydrierten Fettkomponenten erzielt.

Die Jodzahl, als Maßzahl für den durchschnittlichen Sättigungsgrad einer Fettsäure, ist die Jodmenge, welche von 100 g der Verbindung zur Absättigung der Doppelbindungen aufgenommen wird.

Sowohl die Fettsäuren als auch die resultierenden Alkohole können durch Anlagerung von Alkylenoxiden, insbesondere Ethylenoxid und/oder Styroloxid, modifiziert werden.

Beispiele für die Polyetherbausteine von C sind Alkylenoxide wie: Ethylenoxid, Propylenoxid, Butylenoxid, Styroloxid, Dodecenoxid, Tetradecenoxid, 2,3-Dimethyloxiran, Cyclopentenoxid, 1,2-Epoxypentan, 2-Isopropyloxiran, Glycidylmethylester, Glycidylisopropylester, Epichlorhydrin, 3-Methoxy-2,2-dimethyloxiran, 8-oxabicyclo[5.1.0]octan, 2-Pentyloxiran, 2-Methyl-3-phenyloxiran, 2,3-Epoxypropylbenzol, 2-(4-Fluorophenyl)oxiran, Tetrahydrofuran, sowie deren reine Enantiomerenpaare oder Enantiomerengemische.

Die Gruppe Z kann aus Additionsprodukten der Carbonsäureanhydriden wie z. B. Bernsteinsäureanhydrid, Maleinsäureanhydrid oder Phthalsäureanhydrid aufgebaut sein.

Das gewichtsmäßige Verhältnis von Polyester zu Polyether im erfindungsgemäß verwendeten Dispergierharz liegt zwischen 50 : 1 und 1 : 9, vorzugsweise zwischen 40 : 1 und 1 : 5 und besonders bevorzugt zwischen 30 : 1 und 1 : 1. Ein geeignetes Polyester-Polyamin-Kondensationsprodukt ist beispielsweise unter der Bezeichnung TEGOMER^{®} DA 626 (Evonik Goldschmidt GmbH) kommerziell erhältlich.

Im Rahmen der Erfindung kann als Komponente d) grundsätzlich jeder Ruß eingesetzt werden; vorzugsweise wird allerdings ein Leitfähigkeitsruß verwendet. Bei erfindungsgemäß eingesetzten Leitfähigkeitsrußen liegt die Primärteilchengröße zwischen 0,005 und 0,2 µm, bevorzugt zwischen 0,01 und 0,1 µm. Die Dibutylphthalat-Adsorption der Leitfähigkeitsruße liegt zwischen 40 und 1.000 ml pro 100 g Ruß, bevorzugt zwischen 90 und 600 ml pro 100 g Ruß. Auf der Rußoberfläche kann sich eine Vielzahl von sauerstoffhaltigen Gruppen, wie zum Beispiel Carboxyl-, Lactol-, Phenolgruppen, chinoide Carbonylgruppen und/oder Pyronstrukturen befinden.

Leitfähigkeitsruße können beispielsweise aus Acetylen, aus Synthesegas oder nach dem Furnace- Process aus Öl, Trägergasen und Luft hergestellt werden. Herstellungsprozesse und Eigenschaften sind beispielsweise in R. G. Gilg, "Ruß für leifähige Kunststoffe" in : Elektrisch leitende Kunststoffe, Hrsg. : H. J. Mair, S. Roth, 2. Aufl., Carl Hanser Verlag, 1989, München, Wien, S. 21-36 beschrieben.

Erfindungsgemäß handelt sich bei Graphitpulver um zerkleinerten Graphit. Unter Graphit versteht der Fachmann eine Modifikation des Kohlenstoffs, wie sie beispielweise in A. F. Hollemann, E. Wieberg, N. Wieberg, "Lehrbuch der anorganischen Chemie", 91.-100. Aufl., S. 701-702 beschrieben ist. Graphit besteht aus planaren Kohlenstoffschichten, die übereinander angeordnet sind.

Graphit kann erfindungsgemäß beispielsweise durch Mahlen zerkleinert werden. Die Partikelgröße liegt im Bereich von 0,01 µm bis 1 mm, bevorzugt im Bereich von 1 bis 300 µm, am meisten bevorzugt im Bereich von 2 bis 20 µm.

Kohlenstofffasern sind in einer Vielzahl von Typen handelsüblich. Sie werden aus organischen Ausgangsmaterialien hergestellt. Es kommen in erster Linie solche Verbindungen in Frage, die sich zunächst in eine unschmelzbare Zwischenstufe umwandeln lassen und anschließend unter Formerhalt in einem Pyrolyseprozess zum Kohlenstoff carbonisiert werden können wie Cellulose, Polyacrylnitril oder Pech. Bei der Carbonisierungsbehandlung werden alle Elemente bis auf den Hauptanteil Kohlenstoff gasförmig abgespalten. Der relative Kohlenstoffanteil steigt mit zunehmender Temperatur, die üblicherweise im Bereich von 1300 - 1500 °C liegt. Damit wird nach Herstellerangaben ein Kohlenstoffanteil von 90 bis 99 Gewichtsprozenten erreicht. Oberhalb 1800 °C spricht man von Graphitierung. Hierbei wird vor allem die Struktur der graphitischen Kohlenstoffschichten mehr und mehr perfektioniert. Der Schichtebenenabstand zwischen diesen Kohlenstoffschichten bleibt jedoch über dem vom eigentlichen Graphit bekannten Wert. Derartige "Graphitfasern" sind im Rahmen der Erfindung ebenfalls geeignet.

Typische Kohlenstofffasern haben in der Regel einen Durchmesser von größenordnungsmäßig etwa 5 bis 8 µm.

Bevorzugte Carbon Nanotubes haben typischerweise die Form von Röhren, die aus Graphitschichten gebildet werden. Die Graphitlagen sind in konzentrischer Art um die Zylinderachse angeordnet. Carbon Nanotubes werden auch als Kohlenstoff-Nanofibrillen bezeichnet. Sie haben ein Längen-zu-Durchmesser-Verhältnis von mindestens 5, vorzugsweise von mindestens 100, besonders bevorzugt von mindestens 1.000. Der Durchmesser der Nanofibrillen liegt typischerweise im Bereich von 0,003 bis 0,5 µm, vorzugsweise im Bereich von 0,005 bis 0,08 µm, besonders bevorzugt im Bereich von 0, 006 bis 0,05 µm. Die Länge der Kohlenstoff-Nanofibrillen beträgt typischerweise 0,5 bis 1.000 µm, vorzugsweise 0,8 bis 100 µm, besonders bevorzugt 1 bis 10 µm. Die Kohlenstoff-Nanofibrillen besitzen einen hohlen, zylinderförmigen Kern. Dieser Hohlraum hat typischerweise einen Durchmesser von 0,001 bis 0,1 µm, bevorzugt einen Durchmesser von 0,008 bis 0,015 µm. In einer typischen Ausführungsform der Carbon Nanotubes besteht die Wand der Fibrille um den Hohlraum beispielsweise aus 8 Graphitlagen. Die Kohlenstoff- Nanofibrillen können dabei als Agglomerate von bis zu 1.000 µm Durchmesser aus mehreren Nanofibrillen vorliegen. Die Agglomerate können die Form von Vogelnestern, von gekämmtem Garn oder von offenen Netzstrukturen besitzen. Die Synthese der Carbon Nanotubes erfolgt beispielsweise in einem Reaktor, der ein Kohlenstoff enthaltendes Gas und einen Metallkatalysator enthält, wie es z. B. in US-A 5 643 502 beschrieben wird.

Neben mehrwandigen Carbon Nanotubes (MWCNTs, multi-walled carbon nanotubes) können erfindungsgemäß auch einwandige Carbon Nanotubes (SWCNTs, single-walled carbon nanotubes) eingesetzt werden. SWCNTs haben typischerweise einen Durchmesser im Bereich weniger Nanometer, erreichen jedoch im Verhältnis zu ihrem Querschnitt beträchtliche Längen, typischerweise im Bereich mehrerer Mikrometer. Der strukturelle Aufbau von SWCNTs leitet sich von einatomigen Graphit-Lagen (Graphen) ab, die man sich zu einem nahtlosen Zylinder aufgerollt vorstellen kann. SWCNTs können hervorragende elektrische Leiter sein. Die erreichbaren Stromdichten liegen mit 10⁹ A/cm² etwa 1000-fach höher als bei Metalldrähten aus Kupfer oder Silber. Die Herstellung von SWCNTs wird beispielsweise in US 5 424 054 beschrieben.

Graphen ist die Bezeichnung für eine Modifikation des Kohlenstoffs mit zweidimensionaler Struktur, in der jedes Kohlenstoffatom von drei weiteren umgeben ist, so dass sich ein bienenwabenförmiges Muster ausbildet. Graphen ist strukturell eng mit dem Graphit verwandt, der sich gedanklich durch Übereinanderschichten mehrerer Graphene vorstellen lässt. Graphen kann in größeren Mengen durch Exfolierung von Graphit (Aufspaltung in die Basalebenen) gewonnen werden. Hierzu wird Sauerstoff in das Graphitgitter interkaliert, der dann partiell mit dem Kohlenstoff reagiert und eine intrinsische Abstoßung der Schichten bewirkt. Nach chemischer Reduktion können die Graphene in weiteren Schritten in Lösungen suspendiert und in Polymere eingebettet werden.

Die optional als Komponente e) mitverwendeten Metallsalze sind einfache oder komplexe Verbindungen, die als Kation Erdalkali- oder Alkali- und/oder Zinkkationen aufweisen und als Anion beispielsweise solche ausgewählt aus der Gruppe Bis(perfluoralkylsulfonyl)amid bzw. -imid wie z. B. Bis(trifluormethylsulfonyl)imid, Alkyl- und Aryltosylate, Perfluoralkyltosylate, Nitrat, Sulfat, Hydrogensulfat, Alkyl- und Arylsulfate, Polyethersulfate und -sulfonate, Perfluoralkylsulfate, Alkyl- und Arylsulfonate, perfluorierte Alkyl- und Arylsulfonate, Alkyl- und Arylcarboxylate, Perfluoralkylcarboxylate, Perchlorat, Tetrachloroaluminat, Saccharinat, und vorzugsweise Thiocyanat, Isothiocyanat, Dicyanamid, Tetraphenylborat, Tetrakis(pentafluorphenyl)borat, Tetrafluoroborat, Hexafluorophosphat, Phosphat und/oder Polyetherphosphate enthalten, wobei sich die Ladungen innerhalb der Anion-Kation-Kombinationen ausgleichen und wobei auch Mischungen unterschiedlicher Salze eingesetzt werden können. Als Alkalimetallkation des Metallsalzes sind das Natrium-, Kalium-, Lithium- und Cäsium-Kation bevorzugt.

Bevorzugte Mischungen sind insbesondere solche, die als Alkalimetallsalz NaSCN bzw. NaN(CN)₂ und/oder KPF₆ und als Salz mit einem nichtmetallischen Kation ein Imidazolinium- bzw. Imidazoliumsalz, vorzugsweise 1-Ethyl-3-methylimidazoliumethylsulfat (EMIM ES) enthalten.

Neben den Bestandteilen a) bis e) kann die Polyamidzusammensetzung noch kleinere Mengen an Hilfs- oder Zusatzstoffen enthalten, die zum Einstellen bestimmter Eigenschaften benötigt werden. Beispiele hierfür sind schlagzähmodifizierende Kautschuke, weitere Polymere wie z. B. Polyphenylenether, ABS oder Polyolefine, Weichmacher, Farbstoffe, Pigmente bzw. Füllstoffe wie Titandioxid, Zinksulfid, Silikate oder Carbonate, Flammschutzmittel, Verarbeitungshilfsmittel wie Wachse, Zinkstearat oder Calciumstearat, Entformungshilfsmittel, Glaskugeln, Glasfasern, Antioxidantien, UV-Absorber, HALS-Stabilisatoren oder Antidrippingmittel.

In einer möglichen Ausführungsform enthält die Polyamidzusammensetzung 1 bis 25 Gew.-% Weichmacher, besonders bevorzugt 2 bis 20 Gew.-% und insbesondere bevorzugt 3 bis 15 Gew.-%.

Weichmacher und ihr Einsatz bei Polyamiden sind bekannt. Eine allgemeine Übersicht über Weichmacher, die für Polyamide geeignet sind, kann Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure.

Als Weichmacher kommen u. a. p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid infrage.

Die erfindungsgemäße Polyamidzusammensetzung wird aus den einzelnen Bestandteilen vorzugsweise durch Schmelzemischen in einem knetenden Aggregat hergestellt.

Die Komponenten b) und c) können jeweils für sich oder zusammen als Mischung direkt dem Granulat, der Polymerschmelze bzw. der Schmelze aller übrigen Komponenten zugegeben werden. Beispielsweise können sie über eine gegebenenfalls beheizte Pumpe über gegebenenfalls beheizte Zuleitungen über eine Flüssigdosierung im 1. Drittel der Extrusionstrecke zugegeben werden. Sie können jedoch auch jeweils für sich oder zusammen als Mischung in Form eines Masterbatches zugegeben werden. Ein derartiges Masterbatch kann etwa 20 bis etwa 70 Gew.-% dieser Komponenten enthalten. Der Rest des Masterbatches besteht üblicherweise aus Polyamid, wie es auch als Komponente a) eingesetzt wird, oder aus einem Polyamid, das mit dem Polyamid der Komponente a) verträglich ist.

Die erfindungsgemäße Polyamidzusammensetzung ist vorzugsweise eine Polyamidformmasse. Sie kann aber auch ein Pulver sein, das beispielsweise für Oberflächenbeschichtungen oder für schichtweise aufbauende Verfahren, etwa im Rapid Prototyping, dient, beispielsweise durch Lasersintern, Maskensintern oder Selektives Absorbing-Sintering (SAS).

Aus der erfindungsgemäßen Polyamidformmasse können Formteile nach allen üblichen Methoden des Standes der Technik hergestellt und weiterverarbeitet werden, beispielsweise durch Extrusion, Coextrusion, Blasformen oder Spritzgießen. Dabei werden unter dem Begriff "Formteil" auch flächige Körper, wie Folien oder Platten, verstanden. Die erhaltenen Formteile sind ebenfalls Gegenstand der Erfindung.

Überraschenderweise wurde gefunden, dass durch die Zugabe der Komponenten b) und c) die elektrisch dissipative Wirkung bzw. die elektrische Leitfähigkeit, die durch die Komponente d) bewirkt wird, weiter verbessert wird. Hierbei ist bei gleichzeitiger Anwesenheit von b) und c) ein synergetischer Effekt feststellbar. Ist auch b) präsent, so ist die erforderliche Menge von c) zur Erreichung eines bestimmten Leitfähigkeitsniveaus nur halb so groß, als wenn c) alleine vorliegt. Durch die Verbesserung des Perkolationsverhaltens wird insgesamt nur eine geringere Menge der Komponente d) benötigt; dies ist insbesondere bei Verwendung von CNTs oder Graphen, die sehr teuer sind, von Vorteil.

Durch die bessere Dispergierung sowie durch die mögliche Reduzierung der Konzentration der Komponente d) weist die Polymerzusammensetzung eine verbesserte Oberflächengüte auf, die mittels Mikroskop oder besser noch durch die Messung des Reibungskoeffizienten oder des Glanzgrades bestimmbar ist.

Darüber hinaus ist in vielen Fällen die Schlagzähigkeit bzw. Kerbschlagzähigkeit der erfindungsgemäßen Polymerzusammensetzung verbessert, verglichen mit einer Zusammensetzung, die die Komponenten b) und c) nicht enthält. Gleiches gilt für die Zugfestigkeit.

Die Formteile aus der erfindungsgemäßen Polyamidformmasse finden weiten Einsatz dort, wo gute Leitfähigkeitseigenschaften in Verbindung mit guten mechanischen Eigenschaften verlangt werden, beispielsweise in den Industriebereichen Automobil, Luftfahrt und Elektronik sowie in Kommunikationstechnik, Sicherheitstechnik und Leichtbautechnik. Als beispielhafte Anwendungen seien Geräteschalter für exgeschützte Räume, antistatische Gehäuse, Kraftstofffilter sowie Steckverbinder genannt.

## Patentansprüche

1. Polyamidzusammensetzung, die folgende Komponenten enthält:
a) Mindestens 40 Gew.-Teile eines Polyamids, dessen Monomereinheiten im arithmetischen Mittel mindestens 7,5 C-Atome enthalten,
b) 0,1 bis 15 Gew.-Teile mindestens eines Salzes mit einem nichtmetallischen Kation,
c) 0,1 bis 25 Gew.-Teile mindestens eines Dispergiermittels auf Basis von Estern oder Amiden, ausgewählt aus
c1) Polyacrylsäureestern, herstellbar durch Umesterung eines durch Polymerisation erhältlichen Polyacrylsäurealkylesters, dessen Alkylreste 1 bis 3 Kohlenstoffatome aufweisen, mit
a) gesättigten aliphatischen Alkoholen mit 4 bis 50 Kohlenstoffatomen und/oder
b) ungesättigten aliphatischen Alkoholen mit 4 bis 50 Kohlenstoffatomen,
wobei a) und b) in solchen Mengen verwendet werden, dass 30 bis 100 % der Estergruppen umgeestert werden,
und
c2) Polyester-Polyamin-Kondensationsprodukten, erhältlich durch die teilweise oder vollständige Umsetzung von
A) einem oder mehreren aminofunktionellen Polymeren, das mindestens vier Aminogruppen enthält, mit
B) einem oder mehreren Polyestern der allgemeinen Formeln (I)/(Ia)
T-C(O)-[O-A-C(O)]ₓ-OH (I)
T-O-[C(O)-A-O-]_{y}-Z (Ia)
und
C) einem oder mehreren Polyethern der allgemeinen Formel (II)/(IIa)
T-C(O)-B-Z (II)
T-O-B-Z (IIa)
worin
T ein Wasserstoffrest und/oder ein gegebenenfalls substituierter, linearer oder verzweigter Aryl, Arylalkyl, Alkyl- oder Alkenylrest mit 1 bis 24 Kohlenstoffatomen ist,
A mindestens ein zweiwertiger Rest ist, ausgesucht aus der Gruppe der linearen, verzweigten, cyclischen und aromatischen Kohlenwasserstoffe,
Z mindestens ein Rest ist, ausgesucht aus der Gruppe der Sulfonsäuren, Schwefelsäuren, Phosphonsäuren, Phosphorsäuren, Carbonsäuren, Isocyanate, Epoxide, insbesondere der Phosphorsäure und (Meth)-Acrylsäure,
B ein Rest der allgemeinen Formel (III) ist
-(CₗH₂ₗO)ₐ -(CₘH₂ₘO)_{b} -(CₙH₂ₙO)_{c}-(SO)_{d}- (III)
SO = -CH₂-CH(Ph)-O- mit Ph = Phenylrest,
a,b,c unabhängig voneinander Werte von 0 bis 100 sind, mit der Maßgabe, dass die Summe aus a + b + c ≥ 0, vorzugsweise 5 bis 35, insbesondere 10 bis 20 ist, mit der Maßgabe, dass die Summe aus a + b + c + d > 0,
d ≥ 0, vorzugsweise 1 bis 5 ist,
l,m,n unabhängig voneinander ≥ 2, vorzugsweise 2 bis 4 ist,
x,y unabhängig voneinander ≥ 2 sind,
d) einem elektrisch leitfähigen Kohlenstoff, ausgewählt aus der Gruppe Ruß, Graphitpulver, Kohlenstofffasern, Carbon Nanotubes und/oder Graphen, in einer Menge, die in der Polyamidzusammensetzung einen spezifischen Oberflächenwiderstand gemäß IEC 60167 von 10⁻¹ bis 10¹⁰ Ω ergibt,
e) 0 bis 5 Gew.-Teile mindestens eines Metallsalzes sowie optional
f) übliche Hilfs- und Zusatzstoffe,
wobei das Polyamid der Komponente a) kein PA12 ist, falls als Komponente d) Carbon Nanotubes enthalten sind, und
wobei die Summe der Gewichtsteile der Komponenten a) bis f) 100 beträgt.

2. Polyamidzusammensetzung gemäß Anspruch 1,
**dadurch gekennzeichnet,**
**dass** sie
- 0,1 bis 10 Gew.-Teile der Komponente b),
- 1 bis 10 Gew.-Teile der Komponente c),
- 1 bis 10 Gew.-Teile Carbon Nanotubes als Komponente d) sowie
- 0 bis 5 Gew.-Teile der Komponente e) enthält.

3. Polyamidzusammensetzung gemäß einem der vorhergehenden Ansprüche,
**dadurch gekennzeichnet,**
**dass** ihr spezifischer Durchgangswiderstand gemäß ICE 60093 maximal 10⁹ Ωm beträgt.

4. Polyamidzusammensetzung gemäß einem der vorhergehenden Ansprüche,
**dadurch gekennzeichnet,**
**dass** das nichtmetallische Kation der Komponente b) eine quartäre Stickstoff- bzw. Phosphorverbindung ist.

5. Polyamidzusammensetzung gemäß einem der vorhergehenden Ansprüche,
**dadurch gekennzeichnet,**
**dass** das Metallsalz der Komponente e) ein Alkali-, Erdalkali- oder Zinksalz ist.

6. Formteil, hergestellt aus der Polyamidzusammensetzung gemäß einem der vorhergehenden Ansprüche.

## Claims

1. Polyamide composition comprising the following components:
a) at least 40 parts by weight of a polyamide whose monomer units have an arithmetic average of at least 7.5 carbon atoms,
b) from 0.1 to 15 parts by weight of at least one salt having a nonmetallic cation,
c) from 0.1 to 25 parts by weight of at least one dispersant based on esters or amides, is selected from among
c1) polyacrylic esters, which can be prepared by esterification of an alkyl polyacrylate which can be obtained by polymerization and whose alkyl radicals have from 1 to 3 carbon atoms, with
a) saturated aliphatic alcohols having from 4 to 50 carbon atoms, and/or
b) unsaturated aliphatic alcohols having from 4 to 50 carbon atoms,
where a) and b) are used in such amounts that from 30 to 100% of the ester groups are transesterified, and
c2) polyester-polyamine condensation products which can be obtained by partial or complete reaction of
A) one or more amino-functional polymers containing at least four amino groups with
B)one or more polyesters of the general formula (I) or (Ia)
T-C(O)-[O-A-C(O)]ₓ-OH (I)
T-O-[C(O)-A-O-]_{y}-Z (Ia)
and
C)one or more polyethers of the general formula (II) or (IIa)
T-C(O)-B-Z (II)
T-O-B-Z (IIa)
where
T is a hydrogen radical and/or an optionally substituted, linear or branched aryl, arylalkyl, alkyl or alkenyl radical having from 1 to 24 carbon atoms,
A is at least one divalent radical selected from the group consisting of linear, branched, cyclic and aromatic hydrocarbons,
Z is at least one radical selected from the group consisting of sulphonic acids, sulphuric acids, phosphonic acids, phosphoric acids, carboxylic acids, isocyanates, epoxides, in particular phosphoric acid and (meth)acrylic acid,
B is a radical of the general formula (III)
-(CₗH₂ₗO)ₐ -(CₘH₂ₘO)_{b} -(CₙH₂ₙO)_{c}-(SO)_{d}- (III)
SO = -CH₂-CH(Ph)-O- where Ph = phenyl radical,
a,b,c are each, independently of one another, from 0 to 100, with the proviso that the sum a + b + c is ≥ 0, preferably from 5 to 35, in particular from 10 to 20, with the proviso that the sum a + b + c + d is > 0,
d is ≥ 0, preferably from 1 to 5, l,m,n are each, independently of one another, ≥ 2, preferably from 2 to 4,
x,y are each, independently of one another, ≥ 2.
d) an electrically conductive carbon selected from the group consisting of carbon black, graphite powders, carbon fibres, carbon nanotubes and graphene in an amount which in the polyamide composition gives a specific surface resistance in accordance with IEC 60167 of from 10⁻¹ to 10¹⁰ Ω,
e) from 0 to 5 parts by weight of at least one metal salt, and optionally
f) customary auxiliaries and additives,
where the polyamide of component a) is not PA12 if carbon nanotubes are present as component d) and the sum of the parts by weight of the components a) to f) is 100.

2. Polyamide composition according to Claim 1,
**characterized in that**
it contains
- from 0.1 to 10 parts by weight of component b),
- from 1 to 10 parts by weight of component c),
- from 1 to 10 parts by weight of carbon nanotubes as component d) and
- from 0 to 5 parts by weight of component e).

3. Polyamide composition according to either of the preceding claims,
**characterized in that**
its specific volume resistance in accordance with ICE 60093 is not more than 10⁹ Ωm.

4. Polyamide composition according to any of the preceding claims,
**characterized in that**
the nonmetallic cation of the component b) is a quaternary nitrogen or phosphorus compound.

5. Polyamide composition according to any of the preceding claims, **characterized in that** the metal salt of component e) is an alkali metal salt, alkaline earth metal salt or zinc salt.

6. Moulding produced from the polyamide composition according to any of the preceding claims.

## Revendications

1. Composition de polyamide, qui contient les composants suivants :
a) au moins 40 parties en poids d'un polyamide dont les unités monomères contiennent en moyenne arithmétique au moins 7,5 atomes C,
b) 0,1 à 15 parties en poids d'au moins un sel contenant un cation non métallique,
c) 0,1 à 25 parties en poids d'au moins un dispersant à base d'esters ou d'amides, choisis parmi
c1) les esters de l'acide polyacrylique, pouvant être fabriqués par transestérification d'un ester alkylique de l'acide polyacrylique pouvant être obtenu par polymérisation, dont les radicaux alkyle comprennent 1 à 3 atomes de carbone, avec
a) des alcools aliphatiques saturés de 4 à 50 atomes de carbone et/ou
b) des alcools aliphatiques insaturés de 4 à 50 atomes de carbone,
a) et b) étant utilisés en quantités telles que 30 à 100 % des groupes ester soient transestérifiés, et
c2) les produits de condensation de polyester-polyamine, pouvant être obtenus par la réaction partielle ou totale de
A) un ou plusieurs polymères à fonction amino, qui contiennent au moins quatre groupes amino, avec
B) un ou plusieurs polyesters de formule générale (I)/(Ia)
T-C(O)-[O-A-C(O)]ₓ-OH (I)
T-O-[C(O)-A-O-]_{y}-Z (Ia)
et
C) un ou plusieurs polyéthers de formule générale (II)/(IIa)
T-C(O)-B-Z (II)
T-O-B-Z (IIa)
T représentant un radical hydrogène et/ou un radical aryle, arylalkyle, alkyle ou alcényle linéaire ou ramifié, éventuellement substitué, de 1 à 24 atomes de carbone,
A représentant au moins un radical bivalent, choisi dans le groupe constitué par les hydrocarbures linéaires, ramifiés, cycliques et aromatiques,
Z représentant au moins un radical choisi dans le groupe constitué par les acides sulfoniques, les acides sulfuriques, les acides phosphoniques, les acides phosphoriques, les acides carboxyliques, les isocyanates, les époxydes, notamment l'acide phosphorique et l'acide (méth)acrylique,
B représentant un radical de formule générale (III)
- (CₗH₂ₗO) ₐ- (CₘH₂ₘO) _{b}- (CₙH₂ₙO) _{c}- (SO) _{d}- (III)
SO = -CH₂-CH(Ph)-O- avec Ph = radical phényle, a, b, c représentant indépendamment les uns des autres des valeurs de 0 à 100,
à condition que la somme de a + b + c ≥ 0, de préférence de 5 à 35, notamment de 10 à 20, à condition que la somme de a + b + c + d > 0,
d ≥ 0, de préférence 1 à 5,
1, m, n étant indépendamment les uns des autres ≥ 2, de préférence de 2 à 4,
x, y étant indépendamment l'un de l'autre ≥ 2,
d) un carbone électroconducteur, choisi dans le groupe constitué par le noir de carbone, la poudre de graphite, les fibres de carbone, les nanotubes de carbone et/ou le graphène, en une quantité qui permet d'obtenir dans la composition de polyamide une résistance en surface spécifique selon IEC 60167 de 10⁻¹ à 10¹⁰ Ω,
e) 0 à 5 parties en poids d'au moins un sel métallique, et éventuellement
f) des adjuvants et additifs usuels,
le polyamide du composant a) n'étant pas PA12 si des nanotubes de carbone sont contenus en tant que composant d), et
la somme des parties en poids des composants a) à f) étant de 100.

2. Composition de polyamide selon la revendication 1, **caractérisée en ce qu'**elle contient
- 0,1 à 10 parties en poids du composant b),
- 1 à 10 parties en poids du composant c)
- 1 à 10 parties en poids de nanotubes de carbone en tant que composant d) et
- 0 à 5 parties en poids du composant e).

3. Composition de polyamide selon l'une quelconque des revendications précédentes, **caractérisée en ce que** sa résistance en volume spécifique selon ICE 60093 est d'au plus 10⁹ Ωm.

4. Composition de polyamide selon l'une quelconque des revendications précédentes, **caractérisée en ce que** le cation non métallique du composant b) est un composé d'azote ou de phosphore quaternaire.

5. Composition de polyamide selon l'une quelconque des revendications précédentes, **caractérisée en ce que** le sel métallique du composant e) est un sel alcalin, alcalino-terreux ou de zinc.

6. Pièce moulée, fabriquée à partir de la composition de polyamide selon l'une quelconque des revendications précédentes.
